# EUROPÄISCHE PATENTSCHRIFT

(11) **EP 1 619 766 B1**
(45) Veröffentlichungstag und Bekanntmachung des Hinweises auf die Patenterteilung: **17.10.2007**
(21) Anmeldenummer: 05015053.1
(22) Anmeldetag: 12.07.2005
(51) Int. Cl.: H02B 1/20, H02B 1/22

(54) **Sammelschienenanordnung für einen Niederspannungsschaltschrank**
Busbar system for a low voltage switch cabinet
Dispositif de barres omnibus pour une armoire électrique basse tension

(30) Priorität: 23.07.2004 DE 102004035834
(43) Veröffentlichungstag der Anmeldung: 25.01.2006
(73) Patentinhaber: ABB PATENT GmbH, 68526 Ladenburg (DE)
(72) Erfinder: Graf, Ralf, Dipl.-Ing., 67065 Ludwigshafen (DE)
(74) Vertreter: Miller, Toivo

(56) Entgegenhaltungen:
- DE-A1- 10 261 836
- DE-U1- 8 519 738
- FR-A- 1 541 813
- US-A- 4 199 655

## Beschreibung

Die Erfindung betrifft eine Sammelschienenanordnung für einen Niederspannungsschaltschrank gemäß dem Oberbegriff des Anspruches 1.

Innerhalb eines Schaltschrankes befinden sich neben bestimmten Schalt-, Steuer- und Regeleinrichtungen auch Sammelschienen, die im hinteren Bereich angeordnet sind und meist aus Flachbandleiterschienen bestehen, die in einer vertikal verlaufenden Ebene und horizontal verlaufend einander zugeordnet sind. Solche Sammelschienen sind zum Beispiel in US-4 199 655 oder DE-10261836 A offenbart. Dabei sind - abhängig von der zu führenden Stromstärke - pro Phase zwei Flachbandschienen oder vier Flachbandschienen vorgesehen. Bei zwei Flachbandschienen liegen diese übereinander und bei vier Flachbandschienen befinden sich zwei in einer vertikal verlaufenden vorderen Ebene übereinander und zwei dahinter in einer vertikal verlaufenden hinteren Ebene. An den Befestigungs-, Verbindungsstellen und Kontaktierungsstellen der Sammelschienen wächst mit zunehmender Anzahl der hintereinander liegenden Flachbandschienen die Schraubenlänge. Dadurch werden Arbeiten in diesem Bereich erschwert, weil der Aufwand an den Verbindungsstellen sich deutlich erhöht. Die Stromschienen müssen zusammengeführt werden, so dass zusätzliche Abkantungen oder Kröpfungen notwendig sind, oder es müssen entsprechende Verbindungsteile konstruiert werden, wodurch Materialkosten, beispielsweise durch vergrößerte Schraubenlänge, entstehen.

Aufgabe der Erfindung ist es, eine Sammelschienenanordnung der eingangs genannten Art zu schaffen, bei dem die Montage vereinfacht ist, der Arbeitsaufwand sowie der Materialbedarf verringert werden.

Diese Aufgabe wird erfindungsgemäß durch die Merkmale des Anspruches 1 gelöst.

Weitere vorteilhafte Ausgestaltungen der Erfindung sind den Unteransprüchen zu entnehmen.

Wenn bei einer Sammelschienenanordnung pro Phase zwei Flachbandleiter vorgesehen sein sollen, die vertikal übereinander angeordnet sind, dann müssen diese Flachbandleiter in bestimmter Weise miteinander verbunden werden. Das gleiche gilt auch dann, wenn zwei übereinander liegende Flachbandleiterpaare hintereinander gelegt werden.

Erfindungsgemäß werden die Flachbandleiter, die jeweils ein Paar bilden, nicht mehr unmittelbar hintereinander, d. h. horizontal hintereinander angeordnet, sondern versetzt, so dass sich zwischen Flachbandleitern zweier Phasen ein Flachbandleiter befindet, wobei die schräg übereinander bzw. untereinander befindlichen Flachbandleiter mittels des Z-förmig ausgebildeten Verbindungsstückes miteinander verbunden werden.

Wenn in einer Ebene zwei übereinander liegende Flachbandleiter vorgesehen sind, denen dahinter liegende Flachbandleiter zugeordnet sind, dann werden auch die gegeneinander versetzt übereinander angeordnet und die einzelnen Flachbandleiter mittels der Z-förmigen Verbindungsstücke verbunden. Damit sind die hinten liegenden Flachbandleiter von vorne zugänglich, was die Montage erheblich vereinfacht.

Anhand der Zeichnung, in der zwei Ausführungsbeispiele der Erfindung dargestellt sind, sollen die Erfindung sowie weitere vorteilhafte Ausgestaltungen und Verbesserungen der Erfindung und weitere Vorteile näher erläutert werden.

Es zeigen
- Fig. 1: eine schematische Schnittdarstellung einer Niederspannungsschaltanlage, senkrecht zu den Sammelschienen und
- Fig. 2: eine der Schnittansicht gemäß Fig. 1 entsprechende Schnittansicht mit insgesamt vier Flachbandleitern pro Phase.

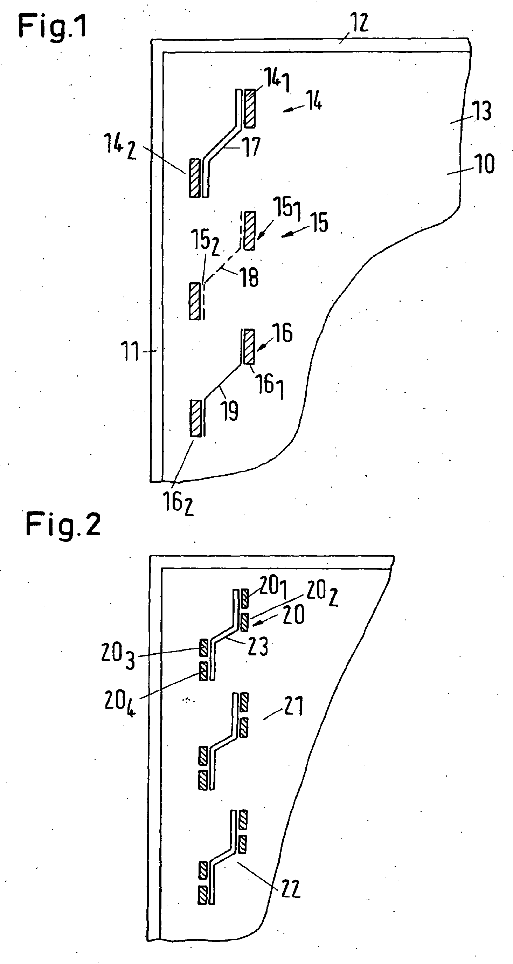

Es sei nun Bezug genommen auf die Fig. 1.

Ein Schaltschrank 10, von dem nur die Rückwand 11 und die Deckwand 12 sowie eine der Seitenwände 13 sichtbar sind, besitzt drei Sammelschienenanordnungen 14, 15 und 16. Hierzu gehören zwei Flachbandleiter 14₁, 14₂; 15₁ und 15₂ sowie 16₁ und 16₂ zusammen und bilden somit für jeweils eine Phase die entsprechende Sammelschienenanordnung. Aus Fig. 1 ist ersichtlich, dass die einzelnen Flachbandleiter 14₁und 14₂; 15₁ und 15₂ ; 16₁ und 16₂ sich nicht in einer horizontalen Ebene, sondern hintereinander und untereinander befinden, wobei sich der Flachbandleiter 14₂ zwischen dem Flachbandleiter 14₁ und 15₁, der Flachbandleiter 15₂ zwischen dem Flachbandleiter 15₁ und 16₁ und der Flachbandleiter 16₂ unterhalb des Flachbandleiter 16₁ befinden. Mittels jeweils eines Z-förmigen Verbindungselementes 17, 18 und 19 sind die einzelnen Flachbandleiter zur Bildung jeweils einer Phase miteinander verbunden.

Bei der Ausführung nach Fig. 2 sind drei Sammelschienenanordnungen. 20, 21 und 22 übereinander angeordnet, wobei die Sammelschienenanordnung 20 aus zwei vertikal übereinander angeordneten Flachbandleitern 20₁, 20₂ und in ähnlicher Weise versetzt wie in der Fig. 1 dargestellt 20₃ und 204 aufgebaut sind, die mittels eines Z-förmigen Verbindungselementes 23, welches dem Verbindungselement 17, 18 und 19 entspricht, miteinander verbunden sind. Die Sammelschienenanordnungen für die beiden anderen Phasen 21 und 22 sind in gleicher Weise aufgebaut, so dass die zugehörigen Flachbandleiterpaare 20₃ und 20₄ von vorne zugänglich sind. Mit dieser Anordnung wird in gleicher Weise wie bei der Anordnung gemäß Fig. 1 der Montageaufwand deutlich reduziert.

Bei der Ausführung nach Fig. 1 ist der Abstand zwischen den Flachbandleitern 14₁ und 14₂; 15₁ und 15₂; 16₁ und 16₂ recht groß gezeichnet; bei einer konkreten Ausführungsform ist der Abstand passend ausgewählt.

## Patentansprüche

1. Sammelschienenanordnung für einen Niederspannungsschaltschrank (10), mit wenigstens zwei hintereinander angeordneter, zu jeder Phase gehöriger Flachbandschienen (14, 15), die im hinteren Bereich des Schaltschrankes horizontal verlaufend angeordnet sind, **dadurch gekennzeichnet, dass** die zu einer Phase gehörigen Flachbandschienen (14, 15) vertikal versetzt gegeneinander ausgerichtet sind, so dass sich die hinteren Flachbandschienen in dem Raum zwischen den jeweiligen vorderen Flachbandschienen befinden, wobei die hintere Flachbandschiene der jeweiligen Phase unterhalb der zugehörigen vorderen Flachbandschiene angeordnet ist, und dass die Flachbandschienenpaare (14₁, 14₂; 15₁, 15₂, 16₁, 16₂) jeder Phase mittels eines Z-förmigen Verbindungsstückes (17, 18, 19) elektrisch leitend miteinander verbunden sind.

2. Sammelschienenanordnung nach Anspruch 1, **dadurch gekennzeichnet, dass** bei jeweils zwei vertikal übereinander liegenden vorderen Flachbandschienen und zwei vertikal übereinander liegenden hinteren Flachbandschienen die beiden hinteren Flachbandschienen gegenüber den beiden vorderen Flachbandschienen jeder Phase versetzt angeordnet sind, so dass die hinteren Flachbandschienen ebenfalls von vorne zugänglich sind, und dass die Flachbandschienenpaare jeder Phase mittels eines Z-förmigen Verbindungsstückes elektrisch leitend miteinander verbunden sind.

3. Sammelschienenanordnung nach Anspruch 1, **dadurch gekennzeichnet, dass** bei jeweils vier vorderen Flachbandschienen, von denen jeweils zwei vertikal übereinander liegen und zwei weitere jeweils hinter den vorderen liegen, und vier hinteren Flachbandschienen, von denen jeweils zwei vertikal übereinander und zwei weitere unmittelbar hinter den vorderen Flachbandschienen liegen, die vier hinteren Flachbandschienen gegenüber den vier vorderen Flachbandschienen jeder Phase versetzt angeordnet sind, so dass die hinteren Flachbandschienen ebenfalls von vorne zugänglich sind, und dass die zwei Anordnungen von Flachbandschienen jeder Phase mittels eines Z-förmigen Verbindungsstückes elektrisch leitend miteinander verbunden sind.

## Claims

1. Busbar arrangement for a low-voltage switchgear cabinet (10) having at least two flat ribbon busbars (14, 15), which are arranged one behind the other, belong to each phase and are arranged in the rear region of the switchgear cabinet, running horizontally, **characterized in that** the flat ribbon busbars (14, 15) belonging to one phase are aligned vertically offset with respect to one another, with the result that the rear flat ribbon busbars are located in the area between the respective front flat ribbon busbars, the rear flat ribbon busbar of the respective phase being arranged below the associated front flat ribbon busbar, and **in that** the flat ribbon busbar pairs (14₁, 14₂; 15₁, 15₂; 16₁, 16₂) of each phase are electrically conductively connected to one another by means of a Z-shaped connecting piece (17, 18, 19).

2. Busbar arrangement according to Claim 1, **characterized in that**, given in each case two front flat ribbon busbars lying vertically one above the other and two rear flat ribbon busbars lying vertically one above the other, the two rear flat ribbon busbars are arranged offset with respect to the two front flat ribbon busbars of each phase, with the result that the rear flat ribbon busbars are likewise accessible from the front, and **in that** the flat ribbon busbar pairs of each phase are electrically conductively connected to one another by means of a Z-shaped connecting piece.

3. Busbar arrangement according to Claim 1, **characterized in that**, given in each case four front flat ribbon busbars, of which in each case two lie vertically one above the other and the other two in each case lie behind the front ones, and four rear flat ribbon busbars, of which in each case two lie vertically one above the other and the other two lie directly behind the front flat ribbon busbars, the four rear flat ribbon busbars are arranged offset with respect to the four front flat ribbon busbars of each phase, with the result that the rear flat ribbon busbars are likewise accessible from the front, and **in that** the two arrangements of flat ribbon busbars of each phase are electrically conductively connected to one another by means of a Z-shaped connecting piece.

## Revendications

1. Dispositif de barres omnibus pour une armoire électrique basse tension (10), comprenant au moins deux barres en bandes plates (14, 15) associées à chaque phase et disposées l'une derrière l'autre, horizontalement dans la partie arrière de l'armoire électrique, **caractérisé en ce que** les barres en bandes plates (14, 15) associées à une phase sont décalées l'une par rapport à l'autre dans le sens vertical, de sorte que les barres en bandes plates arrière se situent dans l'espace formé entre les barres en bandes plates avant respectives, la barre arrière de la phase concernée étant disposée en dessous de la barre avant associée, et **en ce que** les paires de barres en bandes plates (14₁, 14₂; 15₁, 15₂; 16₁, 16₂) de chaque phase sont reliées de manière électroconductrice entre elles à l'aide d'une pièce de liaison (17, 18, 19) en forme de Z.

2. Dispositif de barres omnibus selon la revendication 1, **caractérisé en ce que**, avec deux barres en bandes plates avant, disposées verticalement l'une au-dessus de l'autre, et deux barres en bandes plates arrière disposées verticalement l'une au-dessus de l'autre, les deux barres arrière sont décalées par rapport aux deux barres avant de chaque phase, de sorte que les barres arrière sont également accessibles de l'avant, et **en ce que** les paires de barres en bandes plates de chaque phase sont reliées de manière électroconductrice entre elles à l'aide d'une pièce de liaison en forme de Z.

3. Dispositif de barres omnibus selon la revendication 1, **caractérisé en ce que**, avec quatre barres en bandes plates avant, dont deux sont disposées verticalement l'une au-dessus de l'autre et les deux autres sont disposées derrière les barres avant, et quatre barres en bandes plates arrière, dont deux sont disposées verticalement l'une au-dessus de l'autre et les deux autres sont disposées directement derrière les barres avant, les quatre barres arrière sont décalées par rapport aux quatre barres avant de chaque phase, de sorte que les barres arrière sont également accessibles de l'avant, et **en ce que** les deux agencements de barres en bandes plates de chaque phase sont reliés de manière électroconductrice entre eux à l'aide d'une pièce de liaison en forme de Z.
